# EUROPEAN PATENT SPECIFICATION

(11) **EP 2 815 925 B1**
(45) Date of publication and mention of the grant of the patent: **06.07.2016**
(21) Application number: 13183372.5
(22) Date of filing: 06.09.2013
(51) Int. Cl.: B60R 9/048, B60R 9/12

(54) **Vehicle load carrier accessory**
Fahrzeuglastträgerzubehör
Accessoire de support de charge de véhicule

(43) Date of publication of application: 24.12.2014
(73) Proprietor: Thule Sweden AB, 330 33 Hillerstorp (SE)
(72) Inventor: Eriksson, Henrik, S-554 39 JÖNKÖPING (SE); Lindell, Morgan, S-331 35 VÄRNAMO (SE); Nilvius, Anders, S-331 35 VÄRNAMO (SE); Arvidsson, Anders, S-576 91 SÄVSJÖ (SE); Magnusson, Karl-Johan, S-330 33 HILLERSTORP (SE)
(74) Representative: Valea AB

(56) References cited:
- WO-A1-2009/071262
- US-A- 4 396 138
- US-A- 4 644 986
- US-A- 4 733 809

## Description

### TECHNICAL FIELD

The present disclosure relates to a vehicle load carrier accessory kit. The vehicle load carrier accessory kit disclosed herein simplifies the mounting and dismounting of a load, such as skis, to and from the vehicle load carrier. Furthermore, the kit offers the possibility to easily carry the load, e.g. a pair of skis, between the vehicle and a place of use, e.g. a ski area.

### BACKGROUND OF THE INVENTION

Vehicle load carriers such as roof mounted load carriers e.g. roof racks and rear mounted load carriers such as bicycle carriers are generally sturdy to carry a load of relatively high weight. They are further configured to withstand a relatively high amount of crash violence.

Load, such as luggage, canoes, dinghies, bicycles, or other human leisure or sports equipment are generally retained to the roof rack using straps, ropes or the like. Straps requires the user to first position the load on the vehicle load carrier, thereafter wrap the straps about the load and tie the strap to the vehicle load carrier with sufficient force to retain the load to the vehicle load carrier. For both large and small objects, this can be a tedious and sometimes difficult operation. A smaller user may find it difficult to reach across the vehicle roof for example when positioning a load or a strap.

Skiers can transport their skis on vehicle roof using roof racks. The skis are generally retained to the roof rack using ski holders such as the one disclosed in the US patent application no. US 5390840. The ski holder comprises a first and a second member pivotally connected. The skis can be retained to the roof rack and the vehicle between the first and the second members during transportation.

A previously known assembly for fastening accessories such as a ski carrier to a load carrier for vehicles is disclosed in WO 2009/071262 A1, which shows the preamble of claim 1. The assembly comprises one projecting first part arranged on the load carrier or the accessory and one second part arranged on the accessory or the load carrier, wherein the second part substantially is surrounding the first part and having a spring-loaded locking element for removably securing the first part to the second part.

Another fastening assembly is known from US 4,644,986, which describes a ski bag that is secured about itself and to another ski bag by use of a constructed VELCRO ® strip so that the skis are protected from damage once they are secured within the bags. Thereby utilizing the strip for closure purpose and when secured to a rack of a vehicle preventing rattle and damage.

US patent no. US 3,568,902, Highberger, disclose a device for carrying and securing skis. The device comprises a U-shaped member adapted to receive a pair of skis, and a closure member hinged to the u-shaped member and interlockable therewith. A plunger comprising a cable or chain is connected to the U-shaped member and can be wrapped around a tree or similar. The plunger is thereafter seated in a lock on the U-shaped member, securing the device and the skis to the tree.

There is need for simplifying the mounting and dismounting of load on vehicle load carriers.

### SUMMARY

It is an object of the present invention to provide a vehicle load carrier accessory kit which simplifies the mounting and dismounting of a load, such as skis, from the vehicle load carrier, which optionally could permit a user to remove the load in an easy manner and transport the load away from the vehicle in an equally easy manner.

The object above may be achieved by a vehicle load carrier accessory kit according to claim 1. Thus, there is provided a vehicle load carrier accessory kit for a vehicle load carrier, comprising a first and a second connection member, whereby
- the first connection member comprises a first load connection site for a detachable connection to a load and a second connection site for a detachable connection to the second connection member,
- the second connection member comprises a first connection site for a detachable connection to a vehicle load carrier and a second connection site for a detachable connection to the first connection member, wherein

the second connection site of the first connection member and the second connection site of the second connection member are formed by a male and female snap-on connection.

The first load connection site being configured for a detachable connection to a load, wherein said first load connection site comprises a strap member adapted to extend at least around a portion of said load.

The term "male part" of the connection is to be understood as a part comprising one or more protrusions, which fit within corresponding indentations in a receiving unit, which is referred to as the "female part" of the connection. The male and the female parts thus have corresponding, mating shapes. A "snap-on connection" is to be interpreted as a connection comprising a mechanism which automatically locks or fixes the male and the female part to each other once the connection has been formed. A snap-on connection may also be referred to as click-connection, quick-release connection or quick-release coupling. The snap-on connection may be realized e.g. by one or more flexible or flexibly arranged elements provided on the male and/or female part allowing the male part and the female part to be coupled to each other such as to mate, while blocking a subsequent disconnection of the male and female parts from each other. In order to disconnect the parts from each other, the one or more flexible or flexibly arranged elements must be deliberately moved away by the user from their default position where they block disconnection of the male and female parts from each other, such as to thereby allow disconnection of the male and the female parts from each other.

An advantage of the vehicle load carrier accessory kit is that the connection of the load to the first connection member and the connection of the first connection member to the second connection member are independent from each other. Thereby, the kit simplifies the mounting and dismounting of a load. The load may be attached to the first connection member prior to mounting the load to the load carrier. Especially, the load does not have to be positioned on the vehicle roof in order to be attached to the first connection member, but it can be connected to the first connection member in a position or location in which it is easy for the user to attach it to the first connection member. For example, the load, such as a pair of skis, may be connected with the first connection member prior to putting them on a vehicle roof. As the load has been connected to the first load connection site, the load can be attached to the load carrier by connecting the first connection member to the second connection member, which is preferably already connected to the vehicle load carrier via its first connection site. The snap-on connection provides an easy connection and disconnection of the second connection site of the first connection member to and from the second connection site of the second connection member, while at the same time reliably securing the first connection member to the second connection member. In preferred embodiments, it will be easy to open and close the snap-on connection also for a user wearing gloves or mittens. This is especially advantageous in the case of ski holders for load carriers.

The strap member preferably comprises a hook and/or a loop portion for a detachable connection. Thereby, the strap member may be wrapped around the load, for example skis, and subsequently secured to form a tight connection to the load via a hook and loop connection.

The vehicle load carrier accessory kit may be adapted to be retained to a load having a first circumference length, and the strap member may have an extended or relaxed length which is at least 100 % of the circumference length, preferably an extended or relaxed length which is at least 140 % of the circumference length. Thereby, the strap member may fully encircle the load. For example, it may be wrapped or wound at least one full turn around the load. By wrapping or winding the strap member around the load and subsequently tensioning it, the load may be secured within the first load connection site.

The strap member may comprise at least a stretchable, elastic and flexible material such as an elastic ribbon. The strap member may comprise a fabric, plastic or metal material, or a combination thereof. It may further comprise a metallic component such as a wire or chain adapted for reinforcement of at least a portion of the strap member and/or for theft prevention. The elasticity and flexibility may provide a tighter fit of the strap member around the load, as well as providing an easy connection of the first connection member to the second connection member. This is especially advantageous when using two vehicle load carrier accessory kits for mounting loads having elongated and eventually also bent shapes, such as skis.

The strap member may comprise a proximal end and a distal end. In the proximity of the distal end of the strap member a lock member may be arranged, whereby the lock member is adapted to cooperate with a lock receiving member arranged between the proximal end of the strap member and the lock member. Thereby, the strap member can be fixed such as to prevent it from unrolling, thereby securing the load within the first load connection site.

The strap member may comprise an aperture or a slit configured so that the strap member extends on either side of the second connection site, after the strap member has been mounted. Thereby the strap member, and thus also the first load connection site, may be substantially symmetrically arranged with respect to the second connection site of the first connection member. This enhances the stability and the firmness of the first connection member.

The second connection site of the first connection member may be formed by an annular element. The second connection site of the second connection member may be formed by a rod element. The annular element and the rod element may be dimensioned such that the rod element fits within the annular element with only minor play.

The annular element and/or the rod element may comprise at least one lock flange adapted to be temporarily deformed and/or displaced to form the snap-on connection. The rod element comprises a first and a second lock flange adapted to be temporarily deformed and/or displaced to form the snap-on connection. The one or more lock flanges may be realised by one or more spring-tensioned elements adapted to be automatically displaced against the spring force as the annular element is pushed over the rod element. As the annular element is positioned correctly with respect to the rod element, i.e. as it is fully slid over the rod element, the one or more lock flanges snap back to their default position, thereby blocking disconnection of the annular element from the rod element. The snap-on connection can be deliberately opened by the user, by pushing the one or more lock flanges into their temporarily displaced position and subsequently sliding the annular element away from the rod element.

The rod element i.e. the second connection member, may be provided with a resting surface for the load. The resting surface is adapted to carry at least a part of the weight of the load and to form an intermediate layer between the load, e.g. the skis, and the vehicle load carrier.

The first connection site of the second connection member, e.g. the rod element, may be formed by a screw member having a head, and the head of the screw member may be adapted to be inserted in a track of a vehicle load carrier such as a roof rack. The screw member may be attached to the rod element such that it cannot be removed therefrom, while at the same time the position of the head can be adjusted with respect to the rod element. In order to mount the rod element to a vehicle load carrier, the screw is loosened such that the head can be inserted into the track and positioned along the track such that the position of the rod element along the track can be chosen. The rod element may be attached to the vehicle load carrier by rotating the rod element about the screw member to tighten the rod element to the vehicle load carrier.

The vehicle load carrier accessory kit may be adapted to retain at least one elongated element such as skis, masts or mast parts, paddles, fishing rods, pipes, boards, or the like, to the vehicle load carrier. It may be suitable for both downhill and cross country skies.

The vehicle load carrier accessory kit may be adapted to retain light weight load to the vehicle load carrier, the light weight load having a recommended maximum weight of 20 kilos, preferably 10 kilos, more preferably 7 kilos.

The second connection site of the first connection member may comprise a pivot joint so that the second connection site can tilt with respect to the first connection site of the first connection member. This may be advantageous during the loading and unloading action, by simplifying the connection of the second connection site of the first connection member to the second connection site of the second connection member. This is especially advantageous when using two vehicle load carrier accessory kits for mounting loads having elongated and eventually also bent shapes, such as skis.

The first and/or the second connection member may comprise a lock providing a theft protection and/or lock confirmation between the first and second connection members. The lock may be adapted such that it cannot be locked if the first connection member and the second connection member are not properly connected to each other, thereby providing an indication to the user that the snap-on connection has not been properly formed. For example, the lock may be arranged such that it is not possible to lock it when the one or more lock flanges described above are in a displaced or deformed position.

The vehicle load carrier referred to herein may be a roof rack or a bicycle carrier.

### BRIEF DESCRIPTION OF THE DRAWINGS

The present invention will hereinafter be further explained by means of non-limiting examples with reference to the appended drawings wherein:
Fig. 1 shows a vehicle equipped with vehicle load carriers;
Fig. 2 shows the first connection member of a vehicle load carrier accessory kit prior to attaching a load;
Fig. 3 shows the first connection member of a vehicle load carrier accessory kit comprising one piece of a load;
Fig. 4 shows the first connection member of a vehicle load carrier accessory kit comprising two pieces of a load connected thereto;
Fig. 5 shows a cross section along line V-V of Fig. 4;
Fig. 6 shows the second connection member of a vehicle load carrier accessory kit;
Fig. 7 shows the second connection member attached to a load carrier;
Fig. 8 shows the vehicle load carrier accessory kit comprising load, attached to a vehicle load carrier;
Fig. 9 shows a third connection member for mounting the vehicle load carrier accessory kit to a wall;
Fig. 10 shows the vehicle load carrier accessory kit comprising a load, mounted to a wall.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

When terms such as "upper" and "lower" are used herein, they are to be understood by their usual meaning, with reference to the direction of the different parts in the orientation in which they are illustrated in the figures.

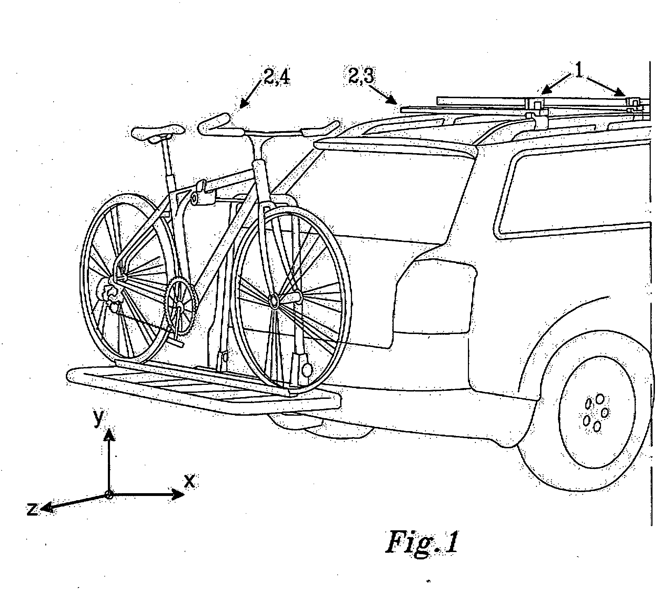

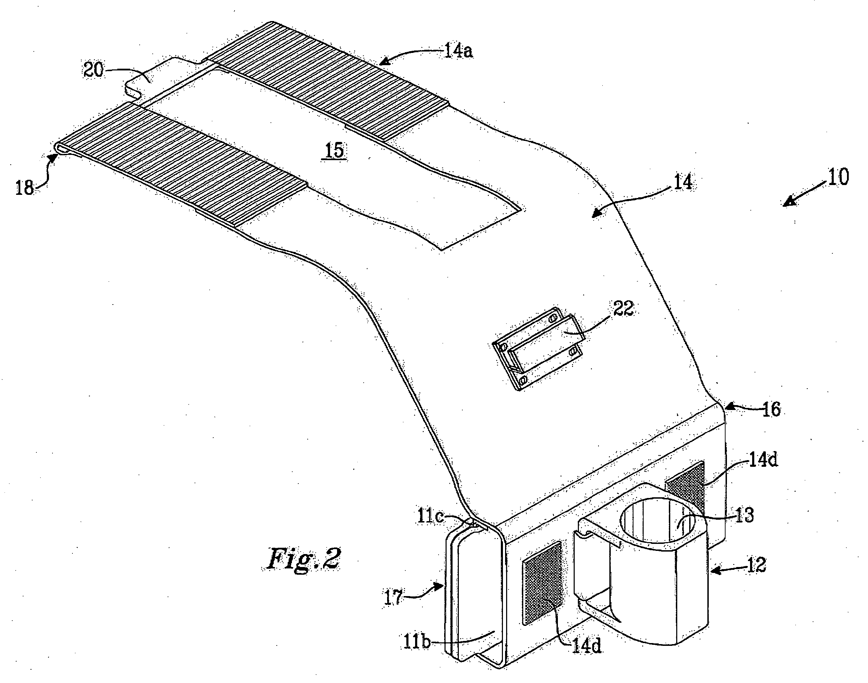

Figure 1 illustrates a vehicle equipped with a vehicle load carrier 2 in the form of a roof rack 3 for carrying load on the vehicle roof. Such roof racks are widely used for carrying loads, which e.g. due to its dimensions or for other reasons does not fit within the boot of the vehicle. For example, skis are often mounted to a roof rack such as the roof rack 3, by directly or indirectly fastening them to the roof rack or by using a roof box, also often referred to as ski box, mounted to the roof rack. The vehicle is further provided with a vehicle load carrier 2 in the form of a bicycle carrier 4. Figures 2 to 8 show a vehicle load carrier accessory kit 1 which is adapted to be used together with a vehicle load carrier 2. Although the vehicle load carrier accessory kit 1 is illustrated for fastening skis to a load carrier 2 throughout the description below, it is to be understood that the use of the vehicle load carrier accessory kit 1 is not limited to connecting skis to a roof rack, but that it can be used for a range of different kind of loads. Also, the vehicle load carrier accessory kit 1 can be used together with different types of load carriers, such as roof racks and bicycle carriers. The load carrier accessory kit 1 is especially useful for loads having an elongated shape, for example different types of sport equipment such as skis, masts or mast parts, paddles, fishing rods, boards or the like. The vehicle load carrier accessory kit presented herein is especially suitable to retain light weight load to the vehicle load carrier 2, where the light weight load has a recommended maximum weight of 20 kilos, preferably 10 kilos, more preferably 7 kilos.

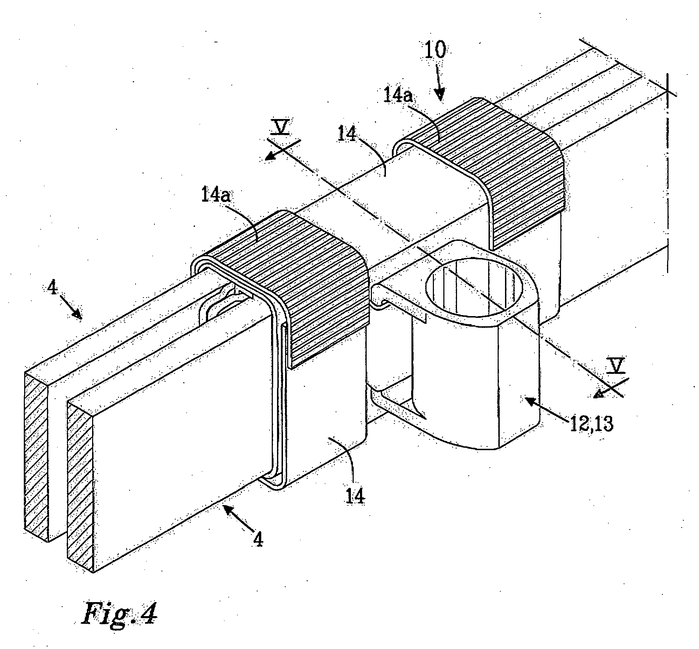

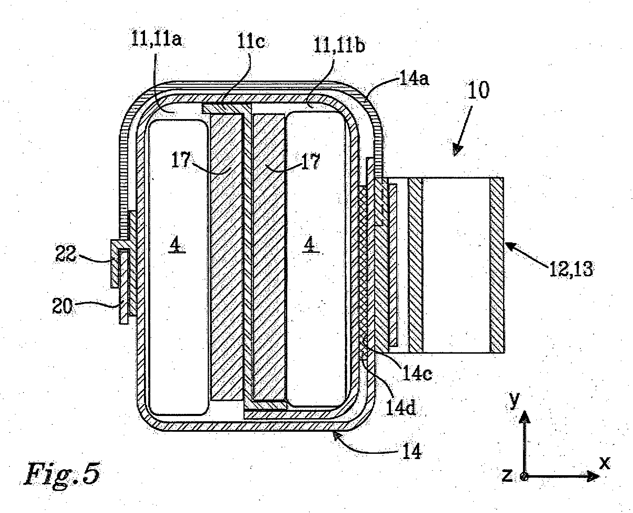

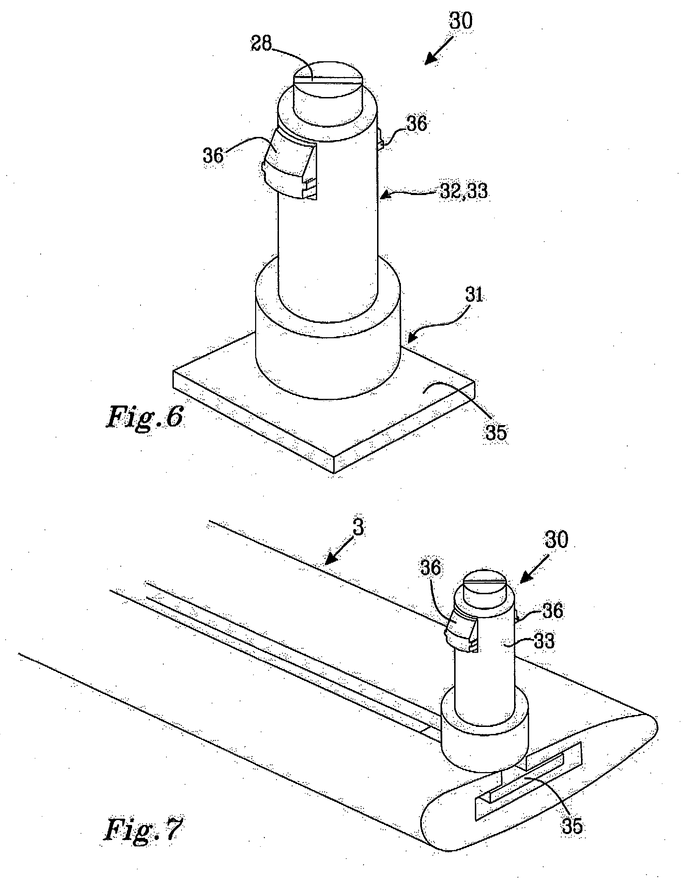

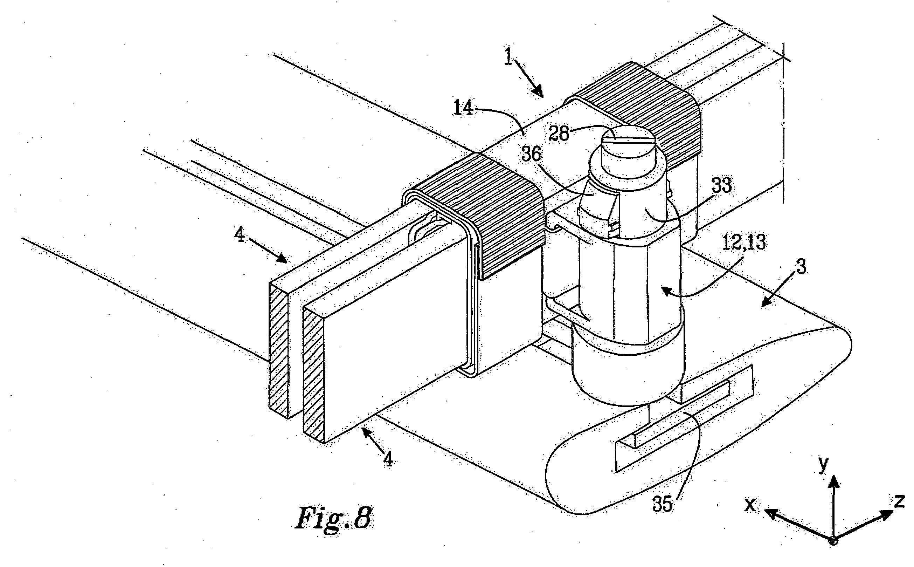

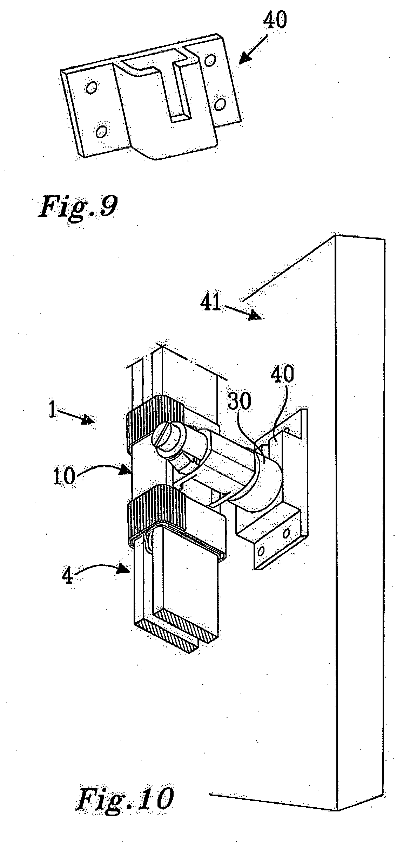

As illustrated in the figures, the vehicle load carrier accessory kit 1 comprises a first connection member 10 and a second connection member 30. The first connection member 10 is illustrated in detail in Fig. 2 to 5. The second connection member 30 is illustrated in Fig. 6 and 7. The vehicle load carrier accessory kit 1, when carrying a load and mounted to a vehicle load carrier, is illustrated in Fig. 8. As can be seen, a load 4, here illustrated as comprising a pair of skis, may be retained in or connected to the first connection member 10, and the second connection member 30 may be mounted to the vehicle load carrier 2, here illustrated as a roof rack 3. The first and second connection member 10, 30 may be connected to each other, as illustrated in Fig. 8, and subsequently released from each other by a detachable connection. By this arrangement, the load can be secured to the first connection member 10 prior to being fixed to the vehicle load carrier 2, which simplifies the mounting and dismounting of a load to the load carrier. This step is illustrated in Fig. 2 to 5. Especially, the problems faced by a relatively short user when tying loads to a roof rack using conventional straps are avoided. The first and second connection member 10, 30 are detachably connectable to each other via a quick-release type coupling, especially by a snap-on connection which provides a quick and reliable connection between the first and second connection member 10, 30. Advantageously, the snap-on connection is adapted such that it can easily be handled by a user wearing gloves or mittens, which is often the case in the season when skis are most often transported. As can be understood from the series of Fig. 2 to 8, the connection of the load 4 to the first connection member 10 is independent of the connection of the first connection member 10 to the second connection member 20. Therefore, the first connection member 10 can also be used when transporting the load between the vehicle and a place of use or storage. Once the load has-been fixed in a first load connection site 11 of the first connection member 10, the load will remain foxed therein independently on whether the first connection member 10 is connected to the second load connection member 30 or not. In the illustrated example, as can be seen in Fig. 4 and 5, two skis 4 are held together by the first connection member 10 which thereby facilitates carrying the skis from the parked vehicle to the ski area, e.g. a ski slope or a cross country track. Further, the kit 1 may comprise more than one second connection member 30, whereby a second connection member 30 may be adapted to be mounted to a personal carrying device, such as a back pack, thereby facilitating the carrying of the sports gear by a user. In a further embodiment, a second connection member 30 may be adapted to be mounted in e.g. a storage space, a shed or a garage, e.g. in a resident or holiday house, for easy storage of the skis or other equipment, as illustrated in Fig. 9 and 10.

Fig. 9 shows a surface mountable bracket 40 to which the second connection member 30 can be connected in a similar manner as to a roof rack for example. Figure 10 shows the bracket 40 being attached to a wall 41 using screws, in this case a garage wall, for storing skis for example.

The first connection member 10 is illustrated in detail in Fig. 2 to 5. It comprises a first load connection site 11 for a detachable connection to a load and a second connection site 12 for a detachable connection to the second connection member 30. For example, the first load connection site 11 may comprise a compartment in which the load may be fixed. In the illustrated example, as can be best seen in Fig. 4 and 5, the first load connection site 11 comprises two compartments 11 a, 11 b divided by a compartment dividing component 11c. The first and second compartments 11 a, 11 b are adapted such that one ski 4 can be attached in each compartment 11a, 11 b. Preferably the compartment dividing component 11c comprises an elastic member, such as an elastic fabric, facilitating the attachment of the skis to the first load connection site 11. Further, the compartment dividing component 11c may be provided on or both sides facing the load with a surface providing friction with respect to the load, while at the same time avoiding damage to the surface of the load, in order to contribute to the fixation of the load. To this end, the compartment dividing component 11c may be provided on one or both sides with one or more layers of cellular rubber 17. In the present example, the rubber 17 prevents the lower sides of the skis from abutting against each other, thereby for example preventing damage to a layer of glide wax or kick wax which is often applied on portions of the lower sides of cross country skis.

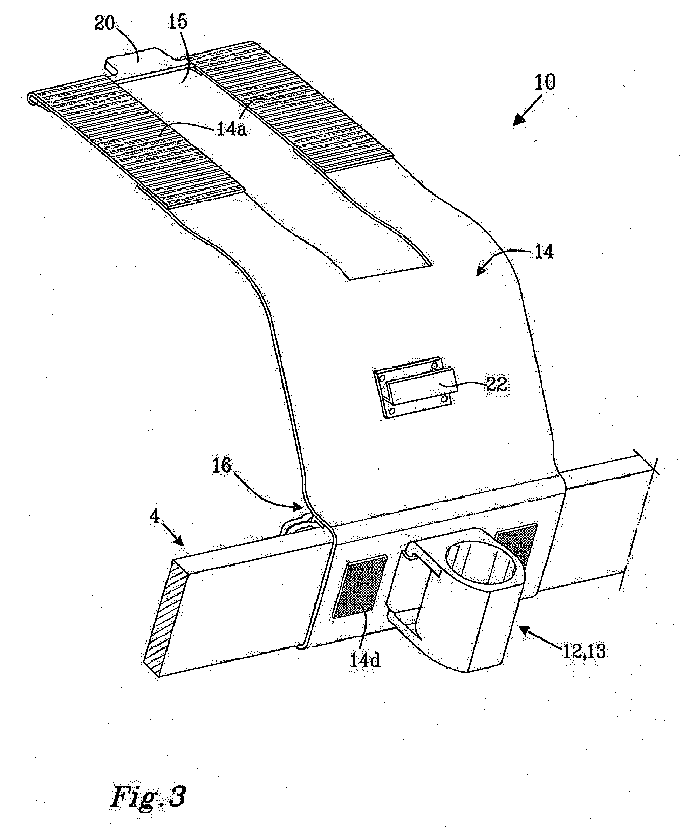

The first load connection site 11 may be realized in a number of different ways, providing easy mounting of the load thereto. For example, the compartments 11 a, 11 b may be at least partially enclosed by elastic and flexible walls, allowing the load to be pushed into the compartments such as to be connected thereto, or allowing the first connection member 10 to be slid over the load such as to connecting the load thereto. Alternatively, an enclosure forming the first load connection site 11 may be opened such as to allow the load to be placed therein, and subsequently closed for connection to the load. Preferably some elastic and/or flexible parts are comprised in the first load connection site 11, for example in an element at least partly enclosing the load connection site 11 or by one or more elements positioned within the load connection site 11, such as to form a tight fit around the load, thereby forming a firm connection between the load and the first connection member 10. Further, the first load connection site 11 may comprise one or more compartments for connection of the load. In the illustrated examples, the first load connection site 11 comprises two compartments 11 a, 11 b each intended for holding one ski, and divided by a compartment dividing component 11c. The component enclosing and/or forming the first load connection site 11 may be formed by at least a portion of a strap member 14. The compartment dividing component 11c may be fixedly attached at both the upper and lower end to respective portions of the strap member 14, as seen in Fig. 4 and 5. Since the compartment dividing component 11 c is preferably elastic, a load unit, for example a ski, can be slid into the second compartment 11 b of the first load connection site 11, as illustrated in Fig. 3. The remaining part of the wall enclosing the second compartment 11 b may comprise a relatively rigid material, and/or it may comprise a material having certain flexibility.

In the illustrated examples, the first load connection site 11 is at least partially formed by a strap member 14 adapted to extend around at least a portion of the load. The strap member 14 may comprise fabric, plastic or metal material, or a combination thereof. It may further comprise a metallic component such as a wire or chain for reinforcement of at least a portion of the strap member 14 and/or for preventing theft of the load. As can be seen in Fig. 2 to 5, the strap member 14 extends around at least a portion of the load compartments 11 a, 11 b. The strap member 14 preferably comprises a hook and/or a loop portion for a detachable connection. For example, the strap member 14 may comprise one part of a Velcro-type connection, the surface against which it is to be attached comprising the mating part of the Velcro-type connection. Velcro straps may be attached to portions of the strap member 14 in order to enable such connection.

The strap member 14, or at least a portion thereof, preferably comprises a stretchable, elastic and flexible material such as an elastic ribbon. Thereby, at least a portion of the strap member 14 is elastic. The elasticity of the strap member contributes to a proper securing of the load. The strap member 14 may have an extended or relaxed length which is at least 100 % of the circumference length of the load which the vehicle load carrier accessory kit 1 is intended to hold. Preferably the extended or relaxed length is at least 140 % of the circumference length. The strap member can then be wrapped at least one full turn around the load. In the present example, the intended load is a pair of skis. The circumference will thereby correspond to the circumference around the outer surface of the pair of skis, when the skis are held together with their respective lower sides facing each other. The strap member 14 may be provided with Velcro straps, burdock hard parts and burdock soft parts 14d, 14c, or similar, enabling a hook and loop connection between at least portions of overlapping parts of the strap member 14 once it has been wound around the load. The hook and loop connection, in combination with the elasticity of the strap member 14, enables the strap member to be wound and kept tightly around the skis.

In the example illustrated in the figures, see especially Fig. 4 and 5, the strap member 14 may encircle about 1 to 1.5 times around the load, starting from a proximal end 16 to a distal end 18 of the strap member 14. At least a portion of the strap member 14, for example a distal portion 14a, comprises an elastic material, such as an elastic fabric, whereby the strap member 14 can be tightened around the load. In some embodiments, the elastic material may extend about half way around the load. A distal portion 14b of the strap member 14 may comprise a material having less flexibility and higher rigidity, in order to contribute to a strong securing of the load. The proximal portion 14b may comprise e.g. a nylon fabric. In some embodiments portions of the strap member 14, which are intended to abut against each other when the first load connection site 11 comprises a load, may be provided with the respective burdock soft part 14c and corresponding burdock hard part 14d. Thereby, the strap member 14 can be tightened and secured around the load. In the embodiment illustrated in Fig. 4 and 5, the elastic portions of the strap member 14 are located closer to the distal end 18 of the strap member 14 than the hook and loop connection 14c, 14d. Alternatively, this may be arranged the other way around, i.e. the hook and loop connection may be arranged closer to the distal end 18 than the elastic portion of the strap member 14.

Alternatively or additionally to the hook and loop connection 14c, 14d, a lock member 20 may be arranged in the proximity of the distal end 18 of the strap member 14. The lock member 20 is adapted to cooperate with a lock receiving member 22 arranged on the strap member 14 between the proximal end 16 of the strap member 14 and the lock member 20, such that the lock member 20 may be received by the lock receiving member 22 thereby securing the load within the first load connection site 11. As can be seen in Fig. 2 and 3, the lock member 20 may comprise a cross bar, that is, a rigid rod, arranged across the strap member 14 at its distal end 18, and the lock receiving member 22 may comprise a hook arranged on the strap member 14 such that the lock member 20 can be received by the lock receiving member 22 by pulling the distal part of the strap member 14 such that, by the elasticity of at least a portion of the strap member 14, the lock member 20 can be pulled down below the hook 22 and slid into the hook 22, where it is retained by the force provided by the elasticity of the strap member 14. To this end, the strap member 14 comprises an aperture or slit 15, which has such an extension as to enable positioning the hook 22 on the strap member 14 such as to enable the above described securing of the load within the first load connection site 11. The distal portion 14a of the strap member 14 may further be provided with a plurality of similar lock members 20, arranged parallel to the first lock member 20 at respective distances therefrom, such as to enable use of the same first connection member 10 together with loads, especially skis, of different dimensions. The aperture or slit 15 is configured such that the strap member 14 extends on either side of the second connection site 12 when the strap member 14 has been mounted, i.e., when the strap member 14 is wrapped such as to form the first load connection site 11. The portions of the strap member 14 on either side of the aperture 15 thereby extend substantially symmetrically on either side of the snap-on connection formed between the second connection site 12 of the first connection member 10 and the second connection site 32 of the second connection member 30. This gives a high stability and firmness of the loaded unit. This aperture or slit 15 also makes it possible to move the distal portion 18 of the strap member 14 over the second connection site 12. As can be seen in Fig. 4, the aperture or slit 15 extends along the strap member 14 such as to extend at least % of a turn around the load. For example, the aperture 15 may have such an extension as to extend to a position of the strap member 14 which is positioned substantially below the compartment dividing component 11c when the strap member 14 is wrapped around the load.

The second connection site 12 may be permanently attached to an exterior surface of the first load connection site 11. The second connection site 12 is connected to a portion forming an exterior wall to the second compartment 11 b of the first load connection site 11, as can be seen in Fig. 2 to 5. The second connection site 12 of the first connection member 10 preferably comprises a pivot joint or other flexible or rotatable connection enabling relative rotation, tilt or pivoting motion between the second connection site 12 and the first connection site 11 of the first connection member 10. Thereby the two parts 11, 12 may be displaced with respect to each other, for example around an axle oriented transverse to the length direction of the vehicle. Thus, according to the coordinate system indicated in Fig. 5, the first load connection site 11 and the second connection site 12 are preferably relatively rotatable around the x-axis, and may also be rotatable around the z-axis. This relative displacement may be enabled by a pivot coupling, or by a flexibility of the materials used in the different components, for example the strap member 14 described above. Further a relative translational displacement along the y-axis between the second connection site 12 and the first load connection site 11 may be possible. Rotation with respect to the y-axis is enabled by rotating the second connection site 12, e.g. a cylinder element 13, of the first connection member 10 with respect to the second connection site 32, e.g. a rod element 33, of the second connection member 30 Thereby, the connection of the first connection member 10 to the second connection member 30 fixed on a load carrier may be simplified. This is especially advantageous, since loads having an elongated and bent shape, and which also has cross sectional dimensions which change over the length, as is characteristic of cross country skis, are commonly attached to the vehicle load carrier at two connection points, i.e., using two vehicle load carrier accessory kits 1, displaced at a certain distance from each other, for example by being mounted respectively to each of two roof racks mounted on the vehicle. Thus, the elongated load may be attached to the load carrier by using two different first connection members 10 attached to the load at some distance from each other, which are connected to two respective second connection members 30 connected to one or more load carriers on a vehicle.

The function and use of the vehicle load carrier accessory kit 1 is illustrated in Fig. 2 to 8. The load may be attached in the first load connection site 11 by unwinding at least a portion of the strap member 14, such that at least the first compartment 11 a of the first load connection site 11 is opened, as illustrated in Fig. 2. Since the compartment dividing component 11 c is preferably elastic, a load unit, for example a ski, can be slid into the second compartment 11b of the first load connection site 11, shown in Fig. 3. A second load unit, for example the second ski of a pair of skis, can be laid next to the first load unit, e.g. the first ski. Subsequently, the first compartment 11 a of the first load connection site 11 is formed by winding the strap member 14 around the load, e.g. around the pair of skis, as illustrated in Fig. 4 and 5. The strap member 14 is wound and pulled such as to close tight around the load, and fastened with the Velcro type connection and/or the lock member 20 and the lock receiving member 22. Due to the extension of the aperture 15 and the elasticity of at least a portion of the strap member 14, the load 4 can be secured within the first load connection site 11. In the illustrated embodiment, the first load connection site 11 is adapted and oriented such that the skis are positioned therein with their undersides oriented substantially in the y-z plane. However, other arrangements may also be possible.

The second connection member 30, which is illustrated in detail in Fig. 6 and 7, comprises a first connection site 31 for a detachable connection to a vehicle load carrier 2, such as a roof rack 3 or a bicycle carrier 4, and a second connection site 32 for a detachable connection to the first connection member 10. The second connection site 12 of the first connection member 10 and the second connection site 32 of the second connection member 30 are formed by a male and female snap-on connection. The snap-on connection may be any type of snap-on connection as defined above.

In the illustrated example, the second connection site 12 of the first connection member 10 is formed by an annular element 13, for example a cylinder shaped element, forming the female part of the connection. The second connection site 32 of the second connection member 30 is formed by a rod element 33, forming the male part of the connection, and being adapted to fit within the annular element 13. In the illustrated embodiments, as can be seen e.g. in Fig. 8, the annular element 13 and the rod element 33 are oriented perpendicularly to the orientation of the load compartments 11 a, 11 b, that is, to the intended orientation of the elongated load. However, other relative orientations are also possible, as long as an easy and secure connection between the first and second connection members 10, 30 is provided for, while the second connection member 30 is fixed to a vehicle load carrier 2. Further, the second connection sites 12, 32 are not limited to an annular element 13 and a rod element 33, but may be formed by other types of elements. However, providing the second connection site 32 of the second connection member 30 in the form of a rod element 33 having a circular circumference area and the second connection site 12 of the first connection member 10 in the form of an annular element 13 having an inner cavity of corresponding shape and dimensions allows a relative rotation between the annular element 13 and the rod element 33 around their axial direction, which in Fig. 8 is oriented in the y-direction.

As illustrated by Fig. 6 and 7, the rod element 33 comprises two lock flanges 36 adapted to be temporarily deformed and/or displaced to form the snap-on connection. The lock flanges 36 comprises an upper tapered surface, a lower surface forming substantially perpendicular angle with the rod element 33, are pivotally connected to the rod element 33 and preferably spring tensioned in a radial direction with respect to the rod element 33 such that they can be pushed radially inwards into a hollow space within the rod element 33. The first connection member 10 can thereby be easily connected to the second connection member 30 by sliding the annular element 13 over the rod element 33. As the lower part of the annular element 13 abuts against the upper tapered surface of the lock flanges 36, these are pushed gradually inwards against the radial pretension, thereby the lock flanges 36 are displaced as the annular element 13 is pushed over them such as to form the connection with the second connection member 30. When the first connection element 10 is properly connected to the second connection member 30, the annular element 13 is positioned below the lock flanges 36 which, by their radial pretension, move back radially outwards to the position, referred to as the default position, they had before mounting of the first connection member 10 to the second connection member 30, thereby blocking detachment of the first connection member 10 from the second connection member 30. The lock flanges 36 are thereby temporarily displaced during connection of the first connection member 10 to the second connection member 30. Preferably, the annular element 13, the rod element 33 and the position of the lock flanges 36 on the rod element 33 are adapted such that the annular element 13 is locked to the rod element 33 with substantially no play.

Alternatively, the lock flanges 36 may be formed by elastic elements, which are deformable such as to allow the annular element 13 to be pushed there over, thereby temporarily being deformed as the connection of the first connection member 10 to the second connection member 30 is formed. Also in this embodiment, the annular element 13, the rod element 33 and the elasticity and the position of.the lock flanges 36 on the rod element 33 are adapted such that the annular element 13 is locked to the rod element 33 with substantially no play.

The first connection element 10 can be detached from the second connection element 30 by the user pushing the lock flanges 36 such as to force the lock flanges 36 to temporarily deform or to be temporarily displaced such that the annular element 13 can be moved over the lock flanges 36, thereby detaching the first connection member 10 from the second connection member 30.

In other embodiments, the male and female snap-on connection may be realised in other ways, for example by a male part comprising one or more flexible components adapted to temporarily deform upon being inserted into a corresponding female part, such as to form a male and female snap-on connection. For example, it may be realized by a lock similar to the kind of lock known from e.g. sport bags.

As mentioned above, the second connection member 30 is adapted to be mounted to a vehicle load carrier 2, and fixed thereto. This may be realized in different ways. In the example illustrated in Fig. 6 to 8, the first connection site of said rod element 33 is formed by a screw member 34 having a head 35, which is adapted to be inserted in a track of a vehicle load carrier 2 such as a roof rack 3. The rod element 33 is attached to the vehicle load carrier 2 by subsequently rotating the rod element 33 about the screw member 34, which has been inserted into the track, to tighten the rod element 33 to the vehicle load carrier 2. The position of the rod element 33, and thereby the position of the load, in the width direction of the vehicle, i.e. along the x-axis, may thereby be adapted. The second connection element, e.g. a rod element, can also be adapted to be attached to a regular a roof rack bar having a square cross section. Instead of having a screw with a screw head, the second connection member can be provided with a clamping mechanism adapted to clamp about parts of the roof rack.

Additionally, the vehicle load carrier accessory kit 1 may comprise a profile adapted to be connected to the vehicle load carrier, such that the second connection member 30 is indirectly connected to the load carrier 2 via the profile. The profile may be provided with a groove and have a similar dimension as the roof rack, such that the second connection member 30 may be adjustably mounted therein via a screw 34 as described above. By orienting the profile such that the groove thereof extends in the length direction of the vehicle, i.e. in the z-direction according to the coordinate system indicated in Fig. 1, the relative distance between two second connection members 30 used for holding a pair of skis can be adjusted. Thereby, the distance between the two second connection members 30 can be adjusted according to the length of the skis.

The vehicle load carrier accessory kit 1 may be provided with a lock 28 such as to lock the first connection member 10 and the second connection member 30 to each other, in order to block detachment of the two parts from each other. The first and/or second connection member 10, 30 may thereby comprise a lock, such as a lock cylinder or a combination lock. In one embodiment, the lock 28 may be provided in the rod element 33, for example with a key lock facing upwards or radially to the side. In addition to providing theft prevention, the lock 28 may provide confirmation of a proper engagement between the first connection member 10 and the second connection member 30, that is, confirmation that the snap-on connection has been properly formed. The lock is thereby arranged in the first and/or second connection member 10, 30 such that it is not possible to lock it unless the snap-on connection has been properly formed. In the illustrated embodiment, for example as shown in Fig. 8, it will only be possible to lock if the lock flanges 36 extend fully, i.e., when they are not in a displaced or deformed position. As described above, as the annular element 13 of the first connection member 10 is slid over the rod element 33 of the second connection member 30, it will cause a temporary displacement or deformation of the lock flanges 36, which will turn back to their respective default positions when the annular element 13 has reached its proper position on the rod element 33. When the lock 28 has the function of lock confirmation, it will only be possible to lock it if the lock flanges 36 are in their default positions. If the snap-on connection between the annular element 13 and the rod element 33 has not been properly formed, the annular element 13 abuts against one or more of the lock flanges 36 such as to hinder their movement back to the default position. In such a case, it will not be possible to lock the lock, giving an indication to the user of an improper coupling between the first and second connection members 10, 30.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A vehicle load carrier accessory kit (1) for a vehicle load carrier (2), comprising a first and a second connection member (10, 30),
- said first connection member (10) comprising a first load connection site (11) and a second connection site (12) for a detachable connection to said second connection member (30),
- said second connection member (30) comprising a first connection site (31) for a detachable connection to a vehicle load carrier (2) and a second connection site (32) for a detachable connection to said first connection member (10),
wherein
said second connection site (12) of said first connection member (10) and said second connection site (32) of said second connection member (30) are formed by a male and female snap-on connection, said first load connection site (11) being configured for a detachable connection to a load, **characterized in that** said first load connection site (11) comprises a strap member (14) adapted to extend at least around a portion of said load (4).

2. The vehicle load carrier accessory kit (1) according to claim 1, wherein said vehicle load carrier accessory kit (1) is adapted to be retained to a load (4) having a first circumference length, and in that said strap member (14) has an extended or relaxed length which is at least 100 % of said circumference length, preferably an extended or relaxed length which is at least 140 % of said circumference length.

3. The vehicle load carrier accessory kit (1) according to any one of the claims 1-2, wherein said strap member (14) comprises at least a stretchable, elastic and flexible material such as elastic ribbon.

4. The vehicle load carrier accessory kit (1) according to any one of the claims 1-3, wherein said strap member (14) comprises a proximal end (16) and a distal end (18), in the proximity of said distal end (18) of said strap member (14) is a lock member (20) arranged adapted to cooperate with a lock receiving member (22) arranged between said proximal end (16) of said strap member (14) and said lock member (20).

5. The vehicle load carrier accessory kit (1) according to any one of the claims 1-4, wherein said strap member (14) comprises an aperture (15) or a slit configured so that said strap member (14) extends on either side of said second connection site (12, 32), after said strap member (14) has been mounted.

6. The vehicle load carrier accessory kit (1) according to any one of the preceding claims wherein said second connection site (12) of said first connection member (10) is formed by an annular element (13).

7. The vehicle load carrier accessory kit (1) according to any one of the preceding claims wherein said second connection site (32) of said second connection member (30) is formed by a rod element (33).

8. The vehicle load carrier accessory kit (1) according to claim 6 or 7, wherein said annular element (13) and/or said rod element (33) comprises at least one lock flange (36) adapted to be temporarily deformed and/or displaced to form said snap-on connection, optionally said rod element (33) comprises a first and a second lock flange (36) adapted to be temporarily deformed and/or displaced to form said snap-on connection.

9. The vehicle load carrier accessory kit according to claim 8, wherein said first connection site (31) of said rod element (33) is formed by a screw member (34) having a head (35), and in that said head (35) of said screw member (34) is adapted to be inserted in a track of a vehicle load carrier (2) such as a roof rack (3).

10. The vehicle load carrier accessory kit according to claim 9, wherein said rod element (33) is attached to said vehicle load carrier (2) by rotating said rod element (33) about said screw member (34) to tighten said rod element (33) to said vehicle load carrier (2), optionally said vehicle load carrier accessory kit (1) is adapted to retain at least one elongated element such as skis, masts or mast parts, paddles, fishing rods, pipes, boards, or the like, to said vehicle load carrier (2).

11. The vehicle load carrier accessory kit (1) according to any one of the preceding claims wherein said vehicle load carrier accessory kit (1) is adapted to retain light weight load to said vehicle load carrier (2), said light weight load having a recommended maximum weight of 20 kilos, preferably 10 kilos, more preferably 7 kilos.

12. The vehicle load carrier accessory kit (1) according to any one of the preceding claims, wherein said second connection site (12) of said first connection member comprises a pivot joint so that said second connection site (12) can tilt with respect to said first connection site (11) of said first connection member (10).

13. The vehicle load carrier accessory kit (1) according to any one of the preceding claims, wherein said first and/or said second connection member (10, 30) comprise a lock (28) providing a theft protection and/or lock confirmation between said first and second connection members (10, 30).

14. The vehicle load carrier accessory kit (1) according to any one of the preceding claims, wherein said vehicle load carrier (2) is a roof rack (3) or a bicycle carrier (4).

## Patentansprüche

1. Fahrzeuglastträgerzubehörsatz (1) für einen Fahrzeuglastträger (2), der ein erstes und ein zweites Verbindungselement (10, 30) umfasst,
- wobei das erste Verbindungselement (10) eine erste Lastverbindungsstelle (11) und eine zweite Verbindungsstelle (12) für eine lösbare Verbindung mit dem zweiten Verbindungselement (30),
- wobei das zweite Verbindungselement (30) eine erste Verbindungsstelle (31) für eine lösbare Verbindung mit einem Fahrzeuglastträger (2) und eine zweite Verbindungsstelle (32) für eine lösbare Verbindung mit dem ersten Verbindungselement (10) umfasst,
wobei
die zweite Verbindungsstelle (12) des ersten Verbindungselements (10) und die zweite Verbindungsstelle (32) des zweiten Verbindungselements (30) von einer äußeren und einer inneren Aufsteckverbindung gebildet sind, wobei die erste Lastverbindungsstelle (11) für eine lösbare Verbindung mit einer Last ausgelegt ist, **dadurch gekennzeichnet, dass**
die erste Lastverbindungsstelle (11) ein Bandelement (14) umfasst, das so ausgelegt ist, dass es zumindest um einen Abschnitt der Last (4) herum verläuft.

2. Fahrzeuglastträgerzubehörsatz (1) nach Anspruch 1, wobei der Fahrzeuglastträgerzubehörsatz (1) so ausgelegt ist, dass er an einer Last (4) mit einer ersten Umfangslänge festgehalten wird, und dadurch, dass das Bandelement (14) eine ausgezogene oder entspannte Länge aufweist, die mindestens 100 % der Umfangslänge beträgt, vorzugsweise eine ausgezogene oder entspannte Länge aufweist, die mindestens 140 % der Umfangslänge beträgt.

3. Fahrzeuglastträgerzubehörsatz (1) nach Anspruch 1 oder 2, wobei das Bandelement (14) mindestens ein dehnbares, elastisches und flexibles Material wie ein Elastikband umfasst.

4. Fahrzeuglastträgerzubehörsatz (1) nach einem der Ansprüche 1 bis 3, wobei das Bandelement (14) ein proximales Ende (16) und ein distales Ende (18) umfasst, sich in der Nähe des distalen Endes (18) des Bandelements (14) ein Verschlusselement (20) befindet, das so angeordnet und ausgelegt ist, dass es mit einem Verschlussaufnahmeelement (22) zusammenwirkt, das zwischen dem proximalen Ende (16) des Bandelements (14) und dem Verschlusselement (20) angeordnet ist.

5. Fahrzeuglastträgerzubehörsatz (1) nach einem der Ansprüche 1 bis 4, wobei das Bandelement (14) eine Öffnung (15) oder einen Schlitz umfasst, die bzw. der so ausgelegt ist, dass das Bandelement (14) auf jeder Seite der zweiten Verbindungsstelle (12, 32) verläuft, nachdem das Bandelement (14) befestigt worden ist.

6. Fahrzeuglastträgerzubehörsatz (1) nach einem der vorhergehenden Ansprüche, wobei die zweite Verbindungsstelle (12) des ersten Verbindungselements (10) von einem ringförmigen Element (13) gebildet ist.

7. Fahrzeuglastträgerzubehörsatz (1) nach einem der vorhergehenden Ansprüche, wobei die zweite Verbindungsstelle (32) des zweiten Verbindungselements (30) von einem Stabelement (33) gebildet ist.

8. Fahrzeuglastträgerzubehörsatz (1) nach Anspruch 6 oder 7, wobei das ringförmige Element (13) und/oder das Stabelement (33) mindestens einen Sicherungsbund (36) umfasst, der so ausgelegt ist, dass er zeitweilig verformt und/oder weggeschoben wird und so die Aufsteckverbindung bildet, das Stabelement (33) optional einen ersten und einen zweiten Sicherungsbund (36) umfasst, die so ausgelegt sind, dass sie zeitweilig verformt und/oder weggeschoben werden und so die Aufsteckverbindung bilden.

9. Fahrzeuglastträgerzubehörsatz nach Anspruch 8, wobei die erste Verbindungsstelle (31) des Stabelements (33) von einem Schraubelement (34) mit einem Kopf (35) gebildet ist, und dadurch, dass der Kopf (35) des Schraubelements (34) so ausgelegt ist, dass er in eine Führung eines Fahrzeuglastträgers (2) wie einen Dachträger (3) eingesetzt wird.

10. Fahrzeuglastträgerzubehörsatz nach Anspruch 9, wobei das Stabelement (33) an dem Fahrzeuglastträger (2) angebracht wird, indem das Stabelement (33) um das Schraubelement (34) gedreht und so das Stabelement (33) an dem Fahrzeuglastträger (2) festgezogen wird, der Fahrzeuglastträgerzubehörsatz (1) optional so ausgelegt ist, dass er mindestens ein langgestrecktes Element wie Skier, Masten oder Mastteile, Paddel, Angeln, Rohre, Bretter oder Ähnliches, an dem Fahrzeuglastträger (2) festhält.

11. Fahrzeuglastträgerzubehörsatz (1) nach einem der vorhergehenden Ansprüche, wobei der Fahrzeuglastträgerzubehörsatz (1) so ausgelegt ist, dass er eine leichte Last an dem Fahrzeuglastträger (2) festhält, wobei die leichte Last ein empfohlenes Höchstgewicht von 20 Kilogramm, vorzugsweise 10 Kilogramm, bevorzugter 7 Kilogramm aufweist.

12. Fahrzeuglastträgerzubehörsatz (1) nach einem der vorhergehenden Ansprüche, wobei die zweite Verbindungsstelle (12) des ersten Verbindungselements eine Schwenkverbindung umfasst, sodass die zweite Verbindungsstelle (12) bezogen auf die erste Verbindungsstelle (11) des ersten Verbindungselements (10) gekippt werden kann.

13. Fahrzeuglastträgerzubehörsatz (1) nach einem der vorhergehenden Ansprüche, wobei das erste und/oder das zweite Verbindungselement (10, 30) einen Verschluss (28) umfasst, der einen Diebstahlschutz bietet und/oder für eine Bestätigung der Verriegelung zwischen dem ersten und zweiten Verbindungselement (10, 30) sorgt.

14. Fahrzeuglastträgerzubehörsatz (1) nach einem der vorhergehenden Ansprüche, wobei der Fahrzeuglastträger (2) ein Dachträger (3) oder ein Fahrradträger (4) ist.

## Revendications

1. Kit d'accessoires de support de charge (1) pour véhicule, destiné à un support de charge (2) pour véhicule, comprenant un premier et un second élément de raccordement (10, 30),
- ledit premier élément de raccordement (10) comprenant un premier point de raccordement de charge (11) et un second point de raccordement (12) pour un raccordement détachable audit second élément de raccordement (30),
- ledit second élément de raccordement (30) comprenant un premier point de raccordement (31) pour un raccordement détachable à un support de charge (2) pour véhicule et un second point de raccordement (32) pour un raccordement détachable audit premier élément de raccordement (10),
dans lequel
ledit second point de raccordement (12) dudit premier élément de raccordement (10) et ledit second point de raccordement (32) dudit second élément de raccordement (30) sont formés par un raccord à enclenchement mâle et femelle, ledit premier point de raccordement de charge (11) étant configuré pour un raccordement détachable à une charge, **caractérisé en ce que** ledit premier point de raccordement de charge (11) comprend un élément de sangle (14) adapté pour s'étendre au moins autour d'une partie de ladite charge (4).

2. Kit d'accessoires de support de charge (1) pour véhicule selon la revendication 1, dans lequel ledit kit d'accessoires de support de charge (1) pour véhicule est adapté pour être retenu sur une charge (4) présentant une première longueur circonférentielle, et en ce que ledit élément de sangle (14) présente une longueur étirée ou relâchée qui est d'au moins 100 % de ladite longueur circonférentielle, de préférence une longueur étirée ou relâchée qui est d'au moins 140 % de ladite longueur circonférentielle.

3. Kit d'accessoires de support de charge (1) pour véhicule selon l'une quelconque des revendications 1 et 2, dans lequel ledit élément de sangle (14) comprend au moins un matériau étirable, élastique et flexible, tel qu'un ruban élastique.

4. Kit d'accessoires de support de charge (1) pour véhicule selon l'une quelconque des revendications 1 à 3, dans lequel ledit élément de sangle (14) comprend une extrémité proximale (16) et une extrémité distale (18), un élément de verrouillage (20) se trouvant à proximité de ladite extrémité distale (18) dudit élément de sangle (14) et étant agencé de manière adaptée pour coopérer avec un élément de réception de verrouillage (22) agencé entre ladite extrémité proximale (16) dudit élément de sangle (14) et ledit élément de verrouillage (20).

5. Kit d'accessoires de support de charge (1) pour véhicule selon l'une quelconque des revendications 1 à 4, dans lequel ledit élément de sangle (14) comprend un orifice (15) ou une fente configuré(e) de telle manière que ledit élément de sangle (14) s'étend des deux côtés dudit second point de raccordement (12, 32), après que ledit élément de sangle (14) a été monté.

6. Kit d'accessoires de support de charge (1) pour véhicule selon l'une quelconque des revendications précédentes, dans lequel ledit second point de raccordement (12) dudit premier élément de raccordement (10) est formé par un élément annulaire (13).

7. Kit d'accessoires de support de charge (1) pour véhicule selon l'une quelconque des revendications précédentes, dans lequel ledit second point de raccordement (32) dudit second élément de raccordement (30) est formé par un élément de barre (33).

8. Kit d'accessoires de support de charge (1) pour véhicule selon la revendication 6 ou 7, dans lequel ledit élément annulaire (13) et/ou ledit élément de barre (33) comprend au moins une bride de verrouillage (36) adaptée pour être déformée et/ou déplacée temporairement pour former ledit raccordement à enclenchement, ledit élément de barre (33) comprenant de manière facultative une première et une seconde bride de verrouillage (36) adaptées pour être déformées et/ou déplacées temporairement pour former ledit raccordement par enclenchement.

9. Kit d'accessoires de support de charge pour véhicule selon la revendication 8, dans lequel ledit premier point de raccordement (31) dudit élément de barre (33) est formé par un élément de vis (34) comportant une tête (35) et en ce que ladite tête (35) dudit élément de vis (34) est adaptée pour être insérée dans une glissière d'un support de charge (2) pour véhicule tel qu'une galerie (3).

10. Kit d'accessoires de support de charge pour véhicule selon la revendication 9, dans lequel ledit élément de barre (33) est fixé sur ledit support de charge (2) pour véhicule en tournant ledit élément de barre (33) sur ledit élément de vis (34) afin de serrer ledit élément de barre (33) sur ledit support de charge (2) pour véhicule, ledit kit d'accessoires de support de charge (1) pour véhicule étant facultativement adapté pour retenir au moins un élément allongé tel que des skis, des mâts ou parties de mât, des pagaies, des cannes à pêche, des tuyaux, des planches, ou similaires, sur ledit support de charge (2) pour véhicule.

11. Kit d'accessoires de support de charge (1) pour véhicule selon l'une quelconque des revendications précédentes, dans lequel ledit kit d'accessoires de support de charge (1) pour véhicule est adapté pour retenir une charge légère sur ledit support de charge (2) pour véhicule, ladite charge légère présentant un poids maximal recommandé de 20 kilos, de préférence 10 kilos, plus préférablement 7 kilos.

12. Kit d'accessoires de support de charge (1) pour véhicule selon l'une quelconque des revendications précédentes, dans lequel ledit second point de raccordement (12) dudit premier élément de raccordement comprend une articulation à pivot de sorte que ledit second point de raccordement (12) peut basculer par rapport audit premier point de raccordement (11) dudit premier élément de raccordement (10).

13. Kit d'accessoires de support de charge (1) pour véhicule selon l'une quelconque des revendications précédentes, dans lequel ledit premier et/ou second élément de raccordement (10, 30) comprend un verrou (28) assurant une protection contre le vol et/ou une confirmation du verrouillage entre lesdits premier et second éléments de raccordement (10, 30).

14. Kit d'accessoires de support de charge (1) pour véhicule selon l'une quelconque des revendications précédentes, dans lequel ledit support de charge (2) pour véhicule est une galerie (3) ou un porte-vélo (4).
